# NEUE EUROPÄISCHE PATENTSCHRIFT

(11) **EP 1 355 838 B2**
(45) Veröffentlichungstag und Bekanntmachung des Hinweises auf die Entscheidung über den Einspruch: **04.05.2011**
(45) Hinweis auf die Patenterteilung: 15.09.2004
(21) Anmeldenummer: 02706640.6
(22) Anmeldetag: 29.01.2002
(51) Int. Cl.: B65G 1/00

(54) **VORRICHTUNG UND VERFAHREN ZUM TRANSPORT VON WERKSTÜCKEN**
DEVICE AND METHOD FOR CONVEYING WORK PIECES
DISPOSITIF ET PROCEDE DE TRANSPORT DE PIECES

(30) Priorität: 31.01.2001 DE 10104510
(43) Veröffentlichungstag der Anmeldung: 29.10.2003
(73) Patentinhaber: Schuler Automation GmbH & Co. KG, 91093 Hessdorf (DE)
(72) Erfinder: VOGEL, Norbert, 91088 Bubenreuth (DE)
(74) Vertreter: Gassner, Wolfgang
(86) Internationale Anmeldenummer: PCT/DE2002/000304
(87) Internationale Veröffentlichungsnummer: WO 2002/060788

(56) Entgegenhaltungen:
- EP-A- 0 893 372
- EP-A- 1 061 020
- WO-A1-02/22479
- DE-U- 29 920 893
- US-A- 4 735 449
- US-A- 5 857 605

## Beschreibung

Die Erfindung betrifft eine Vorrichtung und ein Verfahren zum Transport von Werkstücken.

Eine solche Vorrichtung und ein solches Verfahren sind z.B. aus der DE 299 20 893 U1 bekannt. Bei der bekannten Vorrichtung ist jeder Ansaugdüse eine besondere Unterdruckerzeugungsvorrichtung zugeordnet. Zur Steuerung des Unterdrucks können die Unterdruckerzeuger einzeln oder gruppenweise abund angeschaltet werden. Insbesondere zum Abwerfen von am Transportgurt anhaftenden Werkstücken werden die im Abwurfbereich befindlichen Unterdruckerzeugungsvorrichtungen abgeschaltet. Die Ansaugdüsen sind hier in einem geringen Abstand zur Transportseite des Werkstücks angeordnet. Der Abstand zwischen der Transportseite der Werkstücke und den Ansaugdüsen ist so gering gewählt, daß nur eine geringe Menge an Falschluft durch die beiden Kanten des Werkstücks verbleibenden Öffnungsschlitze gesaugt wird. Es bildet sich quasi ein stationärer Unterdruck aus.

Die bekannte Vorrichtung ist relativ aufwendig aufgebaut. Es sind eine Vielzahl von Unterdruckerzeugungsvorrichtungen vorzusehen. Das erfordert einen relativ hohen Platzbedarf. Die bekannte Vorrichtung ist nicht besonders kompakt aufgebaut. Wegen der Ausbildung eines stationären Unterdrucks werden große Werkstücke mit einer höheren Kraft pro Flächeneinheit an den Fördergurt angezogen als kleine Werkstücke. In Abhängigkeit der jeweiligen Werkstückgröße muß der Antriebsmotor mit einer unterschiedlichen Leistung gefahren werden, damit die Fördergeschwindigkeit konstant gehalten werden kann. Das Aufbringen eines statischen Unterdrucks führt außerdem dazu, daß sich dieser beim Abschalten bei großen Werkstücken langsamer abbaut als bei kleinen Werkstücken. Je nach Größe und Gewicht des anhaftenden Werkstücks findet der Abwurf erst nach Ablauf einer unterschiedlich langen Zeitdauer nach dem Abschalten der Unterdruckerzeugungsvorrichtungen statt. Mittels der bekannten Vorrichtung ist ein zielgenauer Abwurf von Werkstücken nicht möglich.

Aus der US 4,804,081 ist eine Vorrichtung zum hängenden Transport von Werkstücken bekannt. Auch hier sind die Ansaugdüsen zwischen zwei parallel zueinander angeordneten Transportgurten angeordnet. Sie sind gegenüber einer Transportseite der Werkstücke um einen geringen Abstand versetzt, so daß ein schmaler Spalt zwischen der Transportseite des Werkstücks und dem Öffnungsrand der Ansaugdüse gebildet ist. Um das Eindringen von Falschluft in den Spalt zu vermeiden, sind Querstege vorgesehen, welche die Ansaugfläche zwischen den Transportgurten in rechteckige Ansaugzonen unterteilen. Beim Transport der Werkstücke bildet sich auch hier ein stationärer Unterdruck aus, der zu den vorgenannten Nachteilen führt.

Aufgabe der Erfindung ist es, die Nachteile nach dem Stand der Technik zu beseitigen. Es soll insbesondere eine Vorrichtung zum hängenden Transport von nichtmagnetischen Werkstükken angegeben werden, die einfach und kostengünstig herstellbar ist. Weiteres Ziel der Erfindung ist es, eine Vorrichtung sowie ein Verfahren anzugeben, mit denen ein zielgenauer Abwurf von Werkstücken unterschiedlicher Größe und unterschiedlichen Gewichts gleichermaßen möglich ist.

Diese Aufgabe wird durch die Merkmale der Ansprüche 1 und 19 gelöst. Zweckmäßige Ausgestaltungen ergeben sich aus den Merkmalen der Ansprüche 2 bis 18 sowie 20 bis 25.

Unter einem dynamischen Unterdruck wird ein Unterdruck verstanden, welcher sich nach dem Venturi-Prinzip in Folge einer Strömung ausbildet. Die Strömung ist gerichtet von der Belüftungseinrichtung zu den Ansaugöffnungen. Bedingung für die Einstellung eines dynamischen Unterdrucks ist, daß pro Zeiteinheit ein genügend hoher Volumenstrom durch die Belüftungseinrichtung dem Spalt zugeführt und durch die Ansaugöffnungen wieder abgesaugt wird. Es bildet sich dann im Spalt eine für die Erzeugung des Unterdrucks ausreichend hohe Strömungsgeschwindigkeit aus. Die Größe des Unterdrucks ergibt sich aus der Bernoulli-Gleichung. Typische Strömungsgeschwindigkeiten liegen hier zwischen 60 und 80 m/sec.. Die Ausbildung des erfindungsgemäß vorgesehenen dynamischen Unterdrucks hat den Vorteil, daß Werkstücke unabhängig von ihrer Größe stets mit derselben spezifischen Kraft pro Flächeneinheit am Fördergurt gehalten werden. Ein zielgenaues Abwerfen ist unabhängig von der Größe des Werkstücks möglich. Die Werkstücke können ohne Regulierung der Leistung einer Antriebseinheit stets mit derselben Geschwindigkeit transportiert werden.

Nach einer vorteilhaften Ausgestaltung sind die Ansaugöffnungen an einer den Werkstücken zugewandten Wand eines im wesentlichen parallel zur Transportrichtung der Werkstücke verlaufenden Unterdruckkanals vorgesehen.

Durch das Vorsehen eines gemeinsamen Unterdruckkanals entfällt die Notwendigkeit, jede der Ansaugöffnungen mit einer besonderen Unterdruckerzeugungsvorrichtung zu versehen. Die Vorrichtung kann mit einer einzigen mit dem Unterdruckkanal verbundenen Unterdruckerzeugungsvorrichtung betrieben werden. Sie kann kompakt aufgebaut werden. Das Vorsehen eines gemeinsamen Unterdruckkanals schafft außerdem konstruktiven Freiraum, der zur Aufnahme von Mitteln zum zielgenauen Abwurf der Werkstücke genutzt werden kann.

Nach einer vorteilhaften Ausgestaltung sind die Ansaugöffnungen durch in der Wand aufgenommene Ansaugdüsen ausgebildet. Das ermöglicht es, die Vorrichtung je nach Anforderungsprofil mit Ansaugöffnungen eines geeigneten Ansaugquerschnitts auszustatten.

Erfindungsgemäß weist die Einrichtung zur Belüftung an der den Werkstücken zugewandten Seite der Haltevorrichtung in regelmäßiger Anordnung Belüftungsöffnungen auf, so daß sich über die gesamte Länge des Spalts ein im wesentlichen gleichmäßiger dynamischer Unterdruck einstellt. Durch die Einrichtung zur Belüftung wird gewährleistet, daß Werkstücke unabhängig von deren Größe jederzeit mit derselben Kraft am Fördergurt gehalten werden. Die Belüftungsöffnungen können an der den Werkstücken zugewandten Wand des Unterdruckkanals angeordnet sein. Zweckmäßigerweise bildet jede der Belüftungsöffnungen das Ende einer den Unterdruckkanal durchgreifenden Belüftungsleitung, die mit einem Belüftungskanal verbunden sein kann. Der Belüftungskanal kann zur Belüftung mit der Umgebung in Verbindung stehen, er kann aber auch mit einem geringfügigen Überdruck beaufschlagt werden.

Zweckmäßigerweise ist eine Einrichtung zur Steuerung und/oder Regelung des dynamischen Unterdrucks vorgesehen. Es kann sich dabei um eine Einrichtung zur Steuerung und/oder Regelung einer den Unterdruckkanal mit Unterdruck beaufschlagenden Unterdruckquelle handeln. Mittels der Einrichtung kann z.B. die Drehzahl einer als Unterdruckquelle verwendeten Vakuumquelle verändert werden. Es kann aber auch ein Mittel zur Steuerung der durch den Belüftungskanal hindurchtretenden Luftmenge vorgesehen sein. Das macht die Vorrichtung besonders universell. Sie kann z.B. durch das Einstellen einer Luftblende leicht an das jeweilige Anforderungsprofil angepaßt werden. Üblicherweise wird der Unterdruckkanal ständig mit einem vorgegebenen Unterdruck beaufschlagt, der so bemessen ist, daß sich beim Anlegen eines Werkstücks an den Transportgurt im Spalt schnell die erforderliche Strömungsgeschwindigkeit aufbaut.

Insbesondere zum zielgenauen Abwurf der Werkstücke kann eine Einrichtung zur wahlweisen Erzeugung eines den dynamischen Unterdruck unterbrechenden Druckluftstoßes vorgesehen sein. Die Einrichtung zur Erzeugung eines Druckluftstoßes kann entlang eines vorgegebenen Bereichs der Haltevorrichtung vorgesehen sein. Bei dem vorgegeben Bereich kann es sich um eine Abwurfzone der Werkstücke handeln. Zweckmäßigerweise ist der Druckluftstoß vom Unterdruckkanal durch die Ansaugöffnungen zum Spalt gerichtet. Das ermöglicht eine kompakte Bauweise. Der dynamische Unterdruck kann zum Abwerfen der Werkstücke nicht nur unterbrochen werden, sondern es kann zusätzlich Luft in den vorgegebenen Bereich des Spalts eingeblasen und damit ein schnelles Abwerfen der Werkstücke erreicht werden. Wenn beim Erzeugen des Druckluftstoßes im vorgegebenen Bereich weiterhin durch die Ansaugöffnungen Luft angesaugt wird, muss die mit dem Druckluftstoß pro Zeiteinheit zugeführte Luftmenge größer sein als die durch die Ansaugöffnungen abgesaugte Luftmenge.

Nach einer konstruktiven Ausgestaltung ist vorgesehen, daß die Einrichtung koaxial zu den Ansaugöffnungen angeordnete Druckluftdüsen aufweist. Die Druckluftdüsen können axial gegen die Ansaugöffnungen hin- und herbewegbar sein. Nach einem besonders vorteilhaften Ausgestaltungsmerkmal ist vorgesehen, daß mittels der Druckluftdüsen die Ansaugöffnungen verschließbar sind. Im verschlossenen Zustand kann durch die Ansaugöffnungen keine Luft aus dem Spalt in den Unterdruckkanal mehr angesaugt werden.

In konstruktiver Hinsicht hat es sich als zweckmäßig erwiesen, die Druckluftdüsen im Unterdruckkanal anzuordnen. Das ermöglicht eine besonders kompakte Bauweise der Vorrichtung.

Zum Abwerfen des Werkstücks ist es auch möglich, die Ansaugöffnungen zu verschließen. In diesem Fall können anstelle der Druckluftdüsen mit Druckluft verstellbare Kolben eingesetzt werden, welche wahlweise die Ansaugöffnungen verschließen.

Nach einer weiteren Ausgestaltung ist jeder Ansaugöffnung jeweils eine Belüftungsöffnung und ggf. eine Druckluftdüse zugeordnet. Selbstverständlich ist es auch möglich, daß das Verhältnis der Anzahl der Ansaugöffnungen zur Anzahl der Belüftungsöffnungen und ggf. der Druckluftdüsen anders gewählt ist. Die Ansaugöffnungen und die Belüftungsöffnungen können wechselweise in der Längserstreckung der Haltevorrichtung hintereinander angeordnet sein. Die vorgenannten Merkmale tragen zu einer vereinfachten Konstruktion bei. Die Vorrichtung kann damit kostengünstig hergestellt werden.

Zum Abwerfen der Werkstücke können die Druckluftdüsen mit Druckluft beaufschlagt werden. Selbstverständlich ist es möglich, die Druckluftdüsen zum zielgenauen Abwerfen eines Werkstücks gruppenweise anzusteuern bzw. mit Druckluft zu beaufschlagen. Dazu kann eine nach dem Stand der Technik bekannte Steuervorrichtung vorgesehen sein.

Als besonders vorteilhaft wird es angesehen, daß in der Haltevorrichtung, vorzugsweise elektrisch schaltbare, Magneten aufgenommen sind, so daß magnetische Werkstücke wahlweise durch ein Magnetfeld anhaftend am Transportband haltbar sind. Nach einer weiteren vorteilhaften konstruktiven Ausgestaltung ist der Unterdruckkanal zwischen den Magneten angeordnet. Eine solche Vorrichtung ist besonders universell. Mit ihr können nicht nur nichtmagnetische Werkstücke, sondern auch magnetische Werkstücke transportiert und zielgenau abgeworfen werden.

Bei einem Verfahren zum hängenden Transport von Werkstücken, insbesondere tafelförmigen Werkstücken wie Blechen oder Platten, ist vorgesehen, daß eine Einrichtung zur Belüftung des Spalts vorgesehen ist, so daß das Werkstück durch einen im Spalt sich ausbildenden dynamischen Unterdruck am Fördergurt gehalten wird. - Indem erfindungsgemäß ein dynamischer Unterdruck aufgebracht wird, kann bei der Konstruktion auf die nach dem Stand der Technik bekannten aufwendigen Maßnahmen zur Abdichtung bei Verwendung eines stationären Unterdrucks verzichtet werden.

Erfindungsgemäß weist die Einrichtung zur Belüftung entlang der Haltevorrichtung in regelmäßiger Anordnung Belüftungsöffnungen auf, so daß sich über die gesamte Länge des Spalts ein im wesentlichen gleichmäßiger dynamischer Unterdruck einstellt. Damit wird sichergestellt, daß an allen Stellen entlang des Spalts die Werkstücke stets mit gleicher Kraft an den Fördergurt angezogen werden.

Zweckmäßigerweise wird zum Abwerfen der Werkstücke der dynamische Unterdruck durch einen in den Spalt gerichteten Druckluftstoß unterbrochen. Das vorgeschlagene Verfahren bewirkt einen schlagartigen Zusammenbruch des dynamischen Unterdrucks. Am Fördergurt anhaftende Werkstücke können somit zielgenau abgeworfen werden. Der Druckluftstoß kann von einem Unterdruckkanal durch die Ansaugöffnungen zum Spalt gerichtet sein. Das Vorsehen eines solchen Unterdruckkanals trägt weiter dazu bei, daß eine zur Durchführung des Verfahrens geeignete Vorrichtung kompakt und einfach aufgebaut werden kann.

Der dynamische Unterdruck kann ferner durch eine Einrichtung zur Belüftung des Spalts gesteuert und/oder geregelt werden. Zur Einstellung eines vorgegebenen dynamischen Unterdrucks kann so dem Spalt eine vorgegebene Luftmenge zugeführt werden. Die Einrichtung zur Belüftung kann an der den Werkstükken zugewandten Wand des Unterdruckkanal Belüftungsöffnungen aufweisen. Jede Belüftungsöffnung kann das Ende einer den Unterdruckkanal durchgreifende Belüftungsleitung bilden. Die Belüftungsöffnungen sind zweckmäßigerweise mit einem Belüftungskanal verbunden. Der dynamische Unterdruck kann mittels einer Einrichtung zur Steuerung und/oder Regelung eingestellt werden. Es kann sich dabei um eine Einrichtung handeln, mit der die Belüftung des Spalts gesteuert und/oder geregelt wird.

Vorteilhafterweise werden die Druckluftdüsen bei Beaufschlagung mit Druckluft axial in Richtung der Ansaugöffnungen bewegt. Die Ansaugöffnungen können bei Beaufschlagung der Druckluftdüsen mit Druckluft, vorzugsweise mittels der Druckluftdüsen, verschlossen werden. Die vorgenannten Verfahrensschritte tragen dazu bei, daß der dynamische Unterdruck besonders schnell und effizient abgebaut wird.

Der Druckluftstoß wird vorzugsweise in einer vorgegebenen Gruppe aufeinanderfolgender Ansaugöffnungen erzeugt. Damit ist es möglich, insbesondere größere tafelförmige Werkstücke, zielgenau abzuwerfen. Ferner kann zumindest eine stromaufwärts der Gruppe der Ansaugöffnungen angeordnete weitere Ansaugöffnung zum Abwerfen des Werkstücks geschlossen werden. Die Ansaugöffnung kann z.B. mittels eines mit Druckluft beaufschlagbaren Kolbens geschlossen werden. Diese Maßnahme trägt dazu bei, daß ein im Randbereich der Abwurfzone sich eventuell einstellender unerwünschter dynamischer Unterdruck vermieden wird.

Nachfolgend wird die Erfindung anhand der Zeichnung beispielhaft näher erläutert. Es zeigen:
- Fig. 1: einen Querschnitt durch eine erste Vorrichtung,
- Fig. 2: eine abgewandelte Version der ersten Vorrichtung gemäß Fig. 1,
- Fig. 3: eine weitere Variante der ersten Vorrichtung mit zusätzlichen Ausblasöffnungen,
- Fig. 4: einen schematischen Längsschnitt durch eine zweite Vorrichtung,
- Fig. 5: einen Querschnitt entlang der Schnittlinie A - A' gemäß Fig. 4,
- Fig. 6: einen Querschnitt gemäß der Schnittlinie B - B' gemäß Fig. 4,
- Fig. 7: eine Querschnittsansicht durch eine Variante der zweiten Vorrichtung,
- Fig. 8: eine Draufsicht auf die Unterseite einer dritten Vorrichtung,
- Fig. 9: eine Querschnittsansicht gemäß der Schnittlinie C - C' in Fig. 8,
- Fig. 10: eine Querschnittsansicht gemäß der Schnittlinie D - D' in Fig. 8 und
- Fig. 11: eine Seitenschnittansicht gemäß Fig. 9.

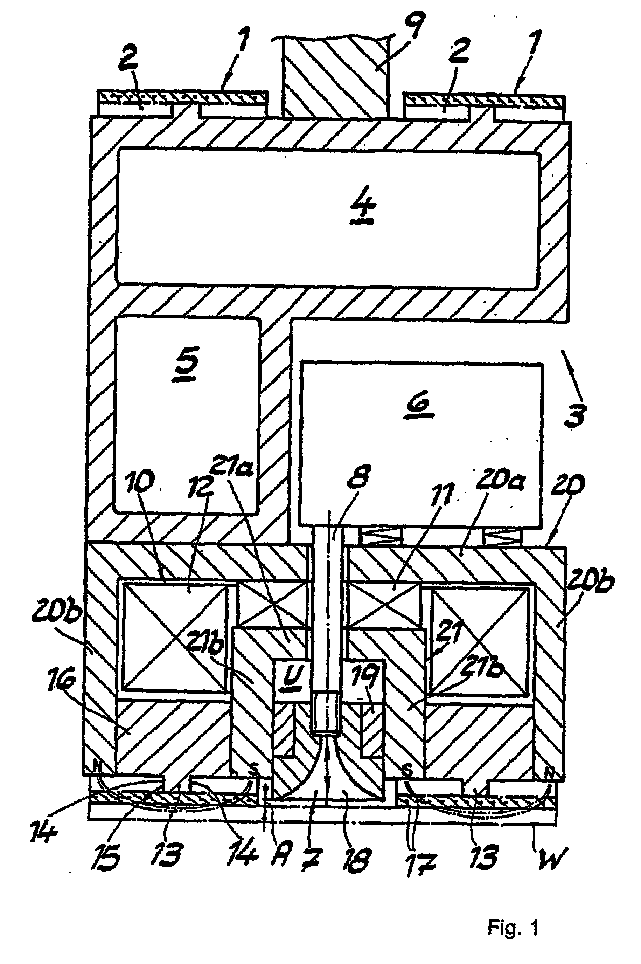

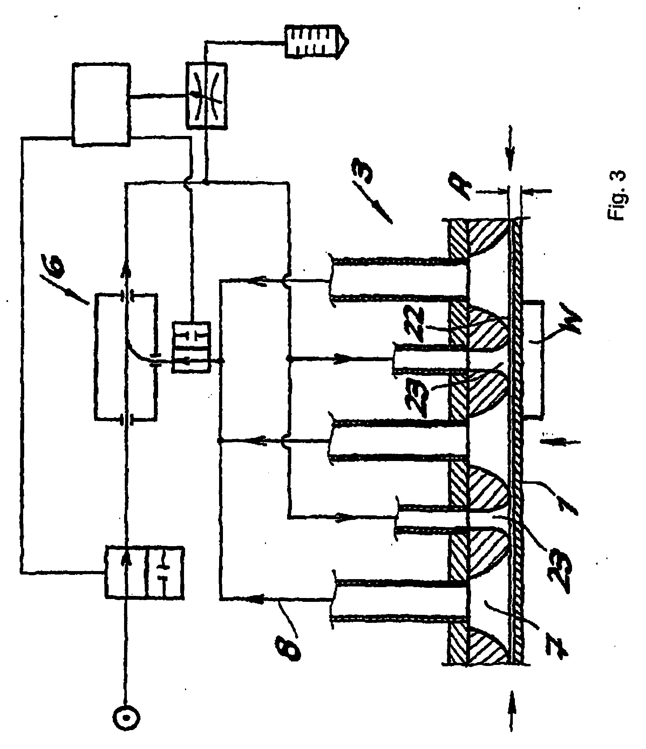

In den Figuren 1 bis 3 ist eine erste Vorrichtung zum Transport von Werkstücken W dargestellt, bei denen es sich um hängende, tafelförmige Bleche oder Platten handelt. Diese Bleche oder Platten können grundsätzlich aus beliebigem Material gefertigt sein. So eignet sich die Vorrichtung nicht nur zum Transport von ferromagnetischen bzw. magnetisierbaren Werkstücken W bzw. Blechen, sondern auch für die Weiterbeförderung von Aluminiumplatten. Daneben können selbstverständlich auch Glasplatten, Kunststoffplatten oder sogar Holzwerkstoffplatten transportiert werden. Außerdem ist natürlich auch ein aufliegender Transport möglich und denkbar, wie er beispielsweise in der WO 97/38927, dort die Fig. 3, im Detail 30 beschrieben wird.

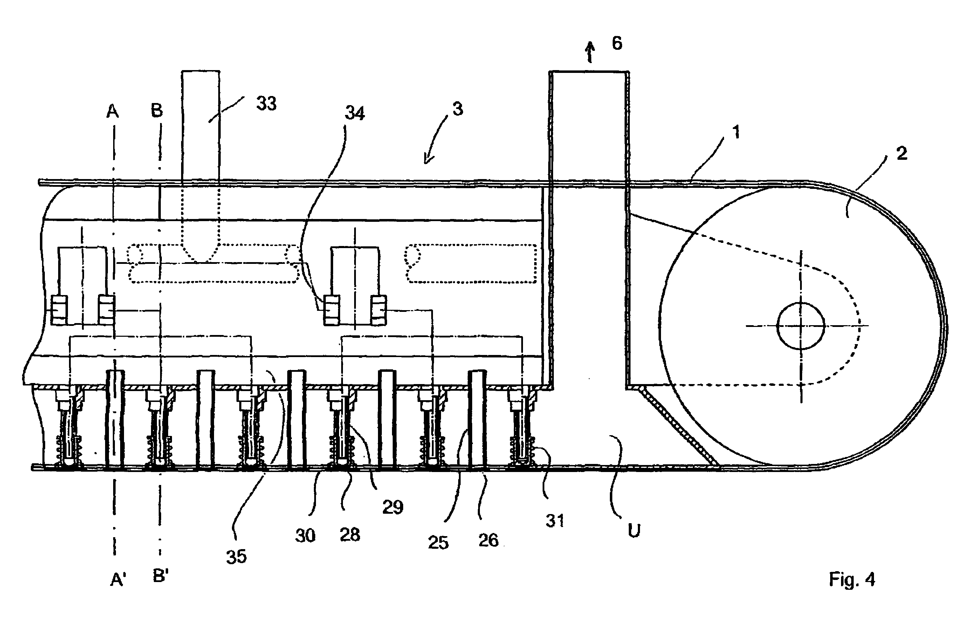

Es versteht sich, daß regelmäßig mehrere der dargestellten Vorrichtungen kombiniert werden und sich gegebenenfalls an unterschiedlichen Plattengrößen anpassen lassen, und zwar beispielsweise so, wie die DE 299 15 611 U1, die DE 43 42 753 A1 oder die US 5 557 387 beschreiben.
Man erkennt, daß im Rahmen der Ausführungsbeispiele die betreffende Vorrichtung mit zwei parallel laufenden Fördergurten 1 ausgerüstet ist, die umlaufend mittels der In Fig.4 dargestellten Zahnräder bzw Riemenscheiben 2 angetrieben werden. Bei den Fördergurten 1 handelt es sich im Rahmen der gezeigten Variante um Zahnriemengurte 1, welche mit zugehörigen Zähnen in entsprechende Ausnehmungen (hier nicht gezeigt) an den Riemenscheiben 2 für deren Antrieb eingreifen. Die beiden Fördergurte bzw. Zahnriemengurte 1 werden an einer Haltevorrichtung 3 vorbeigeführt.

Die Haltevorrichtung 3 ist im Wesentlichen als Hohlprofilleiste ausgestaltet und weist mehrere Kammern 4, 5 auf. Dabei dient die erste Kammer 4 als Druckluftkammer bzw. -kanal und die zweite Kammer 5 als Unterdruckkammer bzw. -kanal. Durch die Druckluftkammer bzw. den Druckluftkanal 4 wird Druckluft zugeführt, die von einer hieran angeschlossenen Unterdruckquelle 6 (siehe auch Fig. 3) in Unterdruck umgewandelt wird. Bei der Unterdruckquelle 6 handelt es sich im Rahmen des Ausführungsbeispiels z.B. um einen Ejektor, welcher druckseitig mit der betreffenden Druckluft beaufschlagt wird und saugseitig den gewünschten Unterdruck an einer oder mehreren Ansaugöffnungen 7 erzeugt. Zu diesem Zweck ist die Unterdruckquelle 6 an die zugehörige Ansaugöffnung 7 über eine Verbindungeleitung 8 angeschlossen. Selbstverständlich kann auch eine übliche Vakuumpumpe oder ein Vakuumgebläse als Unterdruckquelle 6 Verwendung finden.

Grundsätzlich läßt die Erfindung auch Varianten dergestalt zu, daß sowohl die erste Kammer 4 als auch die zweite Kammer 5 mit Unterdruck beaufschlagt werden. Auch eine gleichzeitige Führung von Überdruck durch die Kammern 4, 5 ist denkbar.

Die Haltevorrichtung 3 kann sich über einen zentralen kopfseitigen Anker 9 an einem Gestell, an einer Decke oder dergleichen Festpunkt verankert werden. Der Anker 9 ist mittig zwischen den beiden umlaufenden Fördergurten 1 angeordnet Der vorgeschlagene Aufbau ermöglicht einen Wechsel bzw. einen Austausch der betreffenden handelsüblichen Fördergurte 1, ohne daß irgendwelche Bestandteile der Haltevorrichtung 3 entfernt werden müssen. - Daneben versteht sich, daß einzelne Ansaugöffnungen 7 mit jeweiligen Segmenten der Haltevorrichtung 3 zu Transportmodulen vereinigt werden können, die sich jeweils unabhängig voneinander schalten lassen. Das ist erforderlich, um die transportierten Werkstücke W punktgenau abwerfen zu können (vgl. hierzu auch die EP 0 893 372 A1).

Die Haltevorrichtung 3 hält die Werkstücke W durch Erzeugen von Unterdruck an den beschriebenen Ansaugöffnungen 7 an den jeweiligen Fördergurten 1 fest. Alternativ hierzu oder zusätzlich können die Werkstücke W auch mittels eines den jeweiligen Fördergurt 1 durchdringenden Magnetfelds am Fördergurt 1 festgehalten werden. Zur Erzeugung des entsprechenden Magnetfelds sind schaltbare Magnetvorrichtungen 10 vorgesehen, die mit wenigstens einem Permanentmagnet 11 und einer zugehörigen Kompensationsspule 12 ausgerüstet sind.

Für den erforderlichen Unterdruck an der jeweiligen Ansaugöffnung 7 sorgt - wie bereits beschrieben - die Unterdruckquelle 6, welche über die Verbindungsleitung 8 mit der Ansaugöffnung 7 saugend und/oder abstoßend In Verbindung steht. Dabei ist es grundsätzlich auch denkbar, die Verbindungsleitung 8 einerseits an die Unterdruckkammer 5, andererseits an die Druckluftkammer 4 anzuschließen, um die entsprechenden Saug- oder Abstoßungskräfte darstellen zu können. Das wird dann zumeist über einen Druckumschalter bewerkstelligt.
Die angesprochene Magnetvorrichtung 10 erzeugt In Verbindung mit magnetisierbaren bzw. ferromagnetischen Werkstücken W geschlossene Magnetfeldlinien, so daß nach außen keine störenden Magnetfelder abgestrahlt werden. Das läßt sich im Kern auf die sich einstellenden wechselnden Magnetpole (N = Nordpol und S = Südpol) und die Tatsache zurückführen, daß randseitig der Magnetvorrichtung 10 jeweils gleiche Pole (jeweils ein Nordpol N im Rahmen der Ausführungsbeispiele) gebildet werden.

Zur Längsführung des jeweils anliegenden Fördergurtes 1 ist die Haltevorrichtung 3 mit einer erhabenen Führungseinrichtung 13 ausgerüstet, an deren Längsrändern 14 vorrichtungsseitige Fördergurtauflagen beidseitig anliegen. Bei diesen Fördergurtauflagen kann es sich um die bereits angesprochenen Zähne des Zahnriemengurtes bzw. Fördergurtes 1 handeln.

Die Führungseinrichtung 13 ist als im Querschnitt rechteckförmiger Führungssteg ausgebildet, wie die Fig.1 unmittelbar deutlich macht. Grundsätzlich sind natürlich auch abweichende Querschnittsausbildungen, beispielsweise in Gestalt eines Trapezes, denkbar. Im Rahmen des Ausführungsbeispiels ist die jeweilige Führungseinrichtung 13 mittig im Vergleich zum zugehörigen Fördergurt 1 angeordnet. Daneben sind natürlich auch Variationen dergestalt denkbar, daß zwei Führungseinrichtungen 13 je Fördergurt 1 realisiert werden. Dann geht man zumeist so vor, daß die entsprechenden Führungseinrichtungen bzw. Führungsstege 13 jeweils im Randbereich des Fördergurts 1 angeordnet sind. Dabei empfiehlt es sich ferner, die Führungseinrichtungen 13 jeweils magnetisch leitend auszugestalten, so daß sich jeweils ein Nordpol und ein Südpol in der zugehörigen Führungseinrichtung 13 bildet.

Die Fördemurtauflagen des Fördergurts 1 sind mit zu den Längsrändern 14 der Führungseinrichtung 13 korrespondierenden Anlageflächen 15 ausgerüstet. Dadurch wird eine einwandfreie axiale Führung des jeweiligen Fördergurts 1 erreicht. Das gilt erst recht, wenn zwei (oder auch mehr) Führungseinrichtungen 13 je Fördergurt 1 verwirklicht werden.

Daneben ist die jeweilige Fördergurtauflage im Querschnitt größtenteils rechteckförmig mit an die Fördergurtbreite angepaßter Auflagenbreite ausgebildet, so daß der Fördergurt 1 bis auf die zwischen den Längsrändern 14 dervorrichtungsseitigen Fördergurtauflagen 2 gebildete (rechteckige oder trapezförmig) Aussparung einen rechteckigen Querschnitt besitzt.

In diese Aussparung taucht die Führungseinrichtung 13 bzw. der rechteckförmige Führungssteg 13 ein, welcher als Bestandteil eines Steges 16 ausgebildet sein kann. Dieser Steg 16 läßt sich magnetisch leitend ausführen, so daß bei Realisierung von zwei Führungseinrichtungen 13 je Fördergurt 1 die beschriebenen Pole (N, S) endseitig zwangsläufig entstehen.

Stahllitzen 17 im Fördergurt 1 sorgen dafür, daß bei zugeschalteter Magnetvorrichtung 10 ein einwandfreies Anliegen des Fördergurts 1 an der Haltevorrichtung 3 gewährleistet ist. Insbesondere stellen die Stahllitzen 10 sicher, daß kein Durchhängen des Fördergurtes 1 auftritt.

Die jeweils zwischen den parallel laufenden Fördergurten 1 befindlichen Ansaugöffnungen 7 bilden sich endseitig von trichterartigen Ansaugdüsen 18 aus. Die Ansaugdüsen 18 bzw. die Ansaugöffnungen 7 lassen sich in ihrem Abstand A gegenüber den Werkstükken W verstellen. Das ist durch einen Doppelpfeil in den Figuren angedeutet und wird im Detail so realisiert, daß die Ansaugdüsen 18 mit der Verbindungsleitung 8 über ein Gewinde verbunden sind. Jedenfalls können die Ansaugdüsen 18 bzw. Ansaugöffnungen 7 in Vertikalrichtung wahlweise verschoben werden, so daß der Abstand A der Ansaugöffnung 7 vom jeweiligen Werkstück W variierbar ist.

Daneben deuten die Ausführungsbeispiele auch eine Variation dergestalt an, daß die Verbindungsleitung 8 in eine (Unterdruck-) Kammer bzw. einen Unterdruckkanal U mündet, die/der z.B. mit Hilfe eines verschiebbaren Verschlußstücks 19 abgeschottet wird. Dabei sind-die Ansaugdüsen 18 bzw. die Ansaugöffnungen 7 im Rahmen dieser Variante insgesamt in dem betreffenden Verschlußstück 19 für Unterdruckkanal U angeordnet. Das Verschlußstück 19 läßt sich wiederum in Richtung des Doppelpfeiles verstellen, so daß die gewünschte Variation des Abstandes A der Ansaugöffnung 7 vom jeweiligen Werkstück W - wie zuvor beschrieben - gelingt.

Der Aufbau der Magnetvorrichtung 10 wird im folgenden beschrieben. Wie bereits ausgeführt, greift die Magnetvorrichtung 10 im Rahmen das Ausführungsbeispiels nach der Fig. 1 auf einen Permanentmagneten 11 und eine zugehörige Kompensationsspule 12 zurück. Daneben sind ein äußerer U-Anker 20 mit einer äußeren U-Basis 20a und äußeren U-Schenkeln 20b realisiert. Neben diesem äußeren U-Anker 20 findet sich ein Innerer U-Anker 21, welcher In gleicher Weise eine innere U-Basis 21a und innere U-Schenkel 21 b besitzt.

Zwischen den beiden jeweiligen U-Basen 20a und 21a ist der Permanentmagnet 11 angeordnet, bei welchem es sich um einen Ringmagnete oder auch zwei oder mehrere Stabmagneten aus Strontium-Ferrit oder Neodym-Eisen-Bor handelt.
Als Kompensationsspule 12 kommt eine übliche (Oval- oder Rund-)Wickelspule zum Einsatz, welche horizontal angeordnet und von ihrer Länge her an ein jeweiliges Transportmodul angepaßt ist. Sowohl der innere U-Anker 21 als auch der äußere U-Anker 20 sind als jeweilige Stahlpole unter Berücksichtigung des oder der Permanentmagneten 11 ausgeführt und bilden einen magnetischen Rückschluß, wie dies durch die sich Jeweils formenden magnetischen Pole (S = Südpol; N = Nordpol) angedeutet und im Detail in der DE 197 24 634 beschrieben wird. Auch auf die DE 34 23 482 C1 sei hingewiesen. Infolgedessen entstehen an den beiden U-Schenkein 21 b des Inneren U-Ankers 21 und auch den beiden U-Schenkeln 20b des äußeren U-Ankers 20 jeweils gleiche und zueinander entgegengesetzte Magnetpole.

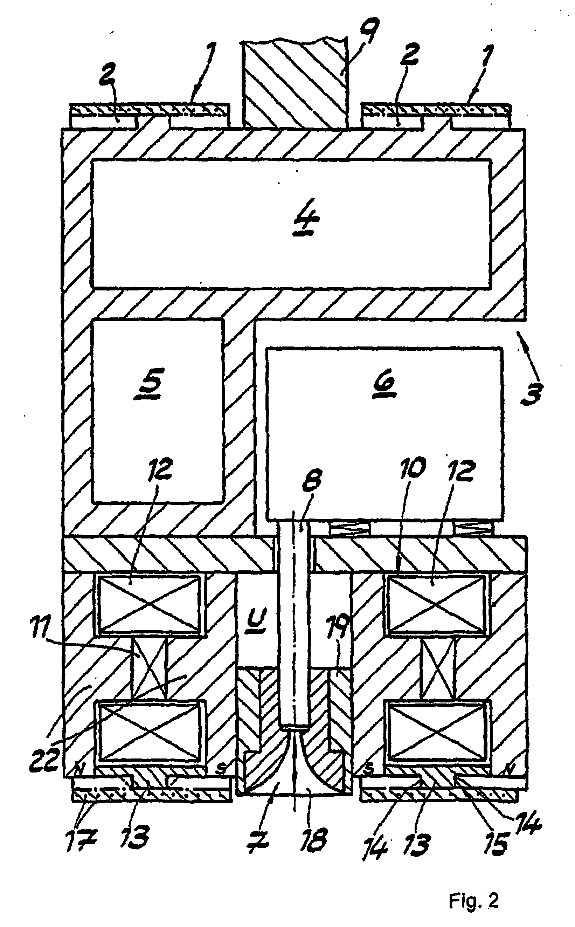

Gleiches gilt für die Variante nach Fig. 2. Allerdings greift diese auf einen (oder zwei) Permanentmagneten 11 zurück, welche(r) jeweils von einer vertikal verlaufenden Kompensationsspule 12 umschlossen wird (werden). Dabei sorgen jeweils seitliche, magnetisch leitende T-Stege T (Stahlpole) dafür, daß sich nicht nur werkstückseitig die bereits beschriebenen wechselweise unterschiedlichen Magnetpole N bzw. S bilden, sondern zusammen mit den magnetisierbaren bzw. ferromagnetischen Werkstücken W jeweils geschlossene Magnetfeldlinien entstehen. Das ist natürlich auch bei der \/ariante nach Fig.1 der Fall. Magnetische Stör- und Steuerfelder treten also praktisch nicht auf.

Im Rahmen der Fig. 3 ist die Vorrichtung nach den Fig. 1 und 2 in teilweisem Längsschnitt dargestellt. Folglich erkennt man nur einen der beiden handelsüblichen Fördergurte 1. Infolge der erhabenen Führungseinrichtung 13 oder vergleichbarer Maßnahmen weist das Werkstück W einen Abstand A von einer Stirnfläche bzw. Öffnungsebene 22 der Haltevorrichtung 3 auf. Im Rahmen des Ausführungsbeispiels gibt die Stärke des Fördergurtes 1 den Abstand A vor.

Die Öffnungsebene 22 ist mit Ansaugöffnungen 7 sowie zusätzlich mit Belüftungs- und Ausblasöffnungen 23 durchsetzt. Die Ansaugöffnungen 7 und die Belüftungs- und Ausblasöffnungen 23 sind wechselweise In Längserstreckung der Haltevorrichtung 3 nebeneinander angeordnet, wobei jeder Ansaugöffnung 7 eine eigene Belüftungs- und Ausblasöffnung 23 zugeordnet ist. Selbstverständlich liegt es im Rahmen der Erfindung, beispielsweise auch nur jeder zweiten Ansaugöffnung 7 eine Belüftungs- und Ausblasöffnung 23 beizuordnen.

Durch den sich infolge des Abstandes A jeweils stirnseitig des Werkstücks W bildenden Schlitz Z zwischen Werkstück W und Öffnungsebene 22 wird jeweils Außenluft durch die Belüftungs- und Ausblasöffnungen 23 angesaugt, wie die Pfeile In der Fig. 3 andeuten. Selbstverständlich dringt Außenluft auch und insbesondere dort ein, wo keine Werkstücke W angesaugt werden.

Die Belüftungs- und Ausblasöffnungen 23 können wahlweise auch mit Überdruck bzw. Druckluft beaufschlagt werden.

Bei der in den Fig. 4 bis 6 gezeigten zweiten Variante ist der um die Haltevorrichtung 3 umlaufende Fördergurt 1 als Zahnriemen ausgebildet. Mit 2 sind endständig an der Haltevorrichtung 3 angebrachte Riemenscheiben bzw. Zahnräder bezeichnet.

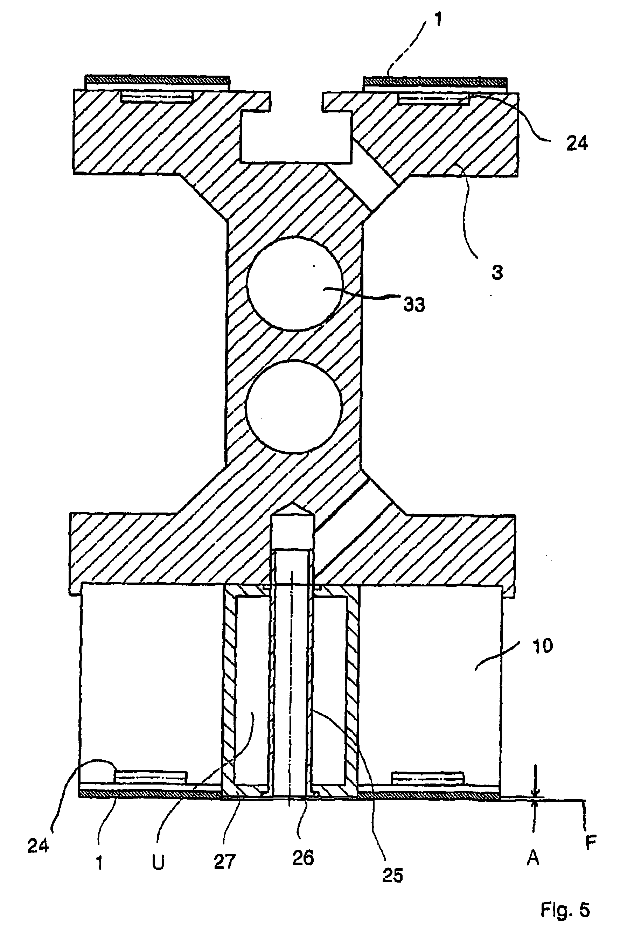

Wie am besten aus den Fig. 4 und 5 ersichtlich, ist ein Unterdruckkanal U zwischen den beiden schaltbaren Magnetvorrichtungen 10 abgebracht. Im gezeigten Ausführungsbeispiel laufen zwei Fördergurte 1 um die Haltevorrichtung 3. Die Fördergurte 1 sind in Nuten 24 geführt.

Der Unterdruckkanal U wird durchgriffen von Balüftungsleitungen 25. An den einen Enden der Belüftungsleitungen 25 vorgesehenen Belüftungsöffnungen 26 befinden sich In einer den (hier nicht gezeigten) Werkstücken zugewandten Wand 27. Die Belüftungsleitungen 25 sind an ihren anderen Ende lediglich zur Umgebung hin geöffnet.

Eine den (hier nicht gezeigten) Werkstücken zugewandten Außenseite der Wand 27, welche die Öffnungsebene 22 der Belüftungsöffnungen 26 bildet, ist gegenüber einer durch die den (hier nicht gezeigten) Werkstücken W zugewandte Außenseite der Fördergurte 1 definierte Förderebene F mit einem Abstand A zurückversetzt. Der Spalt Z wird begrenzt durch die Förderebene F, die beiden Fördergurte 1 sowie die Außenseite der Wand 27.

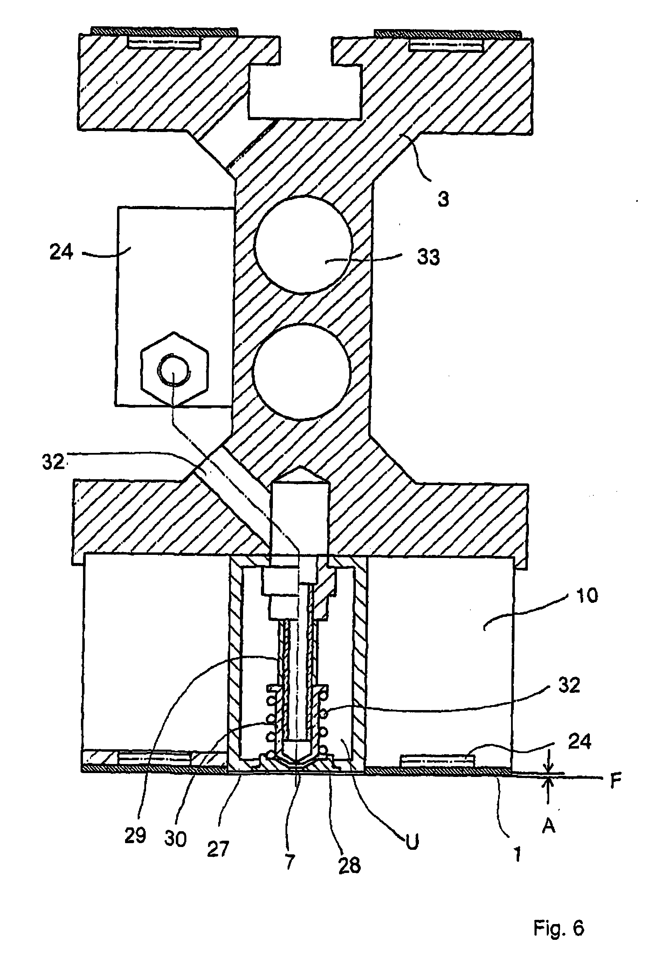

Wie insbesondere in Fig. 6 erkennbar ist, sind in der Wand 27 des Unterdruckkanals U temer die Ansaugöffnungen 7 vorgesehen. Die Ansaugöffnungen 7 sind in mit der Wand 27 verbundenen Ansaugblenden 28 gebildet. Die Ansaugblenden 28 können z.B. in die Wand 27 eingeschraubt sein. Die Ansaugblenden 28 sind an ihrer dem Unterdruckkanal U zugewandten Rückselte konisch nach Art eines Ventilsitzes ausgebildet.

Mit 29 sind in den Unterdruckkanal U ragende Druckluftstutzen bezeichnet, auf denen axial verschiebbar Düsenkolben 30 aufgenommen sind. Rückstellfedem 31 zwingen die Düsenkolben 30 in eine Öffnungsposition, d.h. eine Position, in der die Ansaugöffnungen 7 mit dem Unterdruckkanal U in Verbindung sind. Die Druckluftstutzen 29 sind an ihren anderen Enden über Druckluftzuführungen 32 mit einem Druckluftkanal 33 verbunden. In die Druckluftzuführungen 32 sind Ventile 34 eingeschaltet, die vorzugsweise elektrisch schaltbar sind. Die Ventile 34 können insbesondere gruppenweise ansteuerbar sein.

Wie insbesondere aus Fig. 4 erkennbar ist, sind die Belüftungsöffnungen 26 und die Ansaugöffnungen 7 aufeinanderfolgend Jeweils im gleichen Abstand entlang einer Förderrichtung angeordnet.

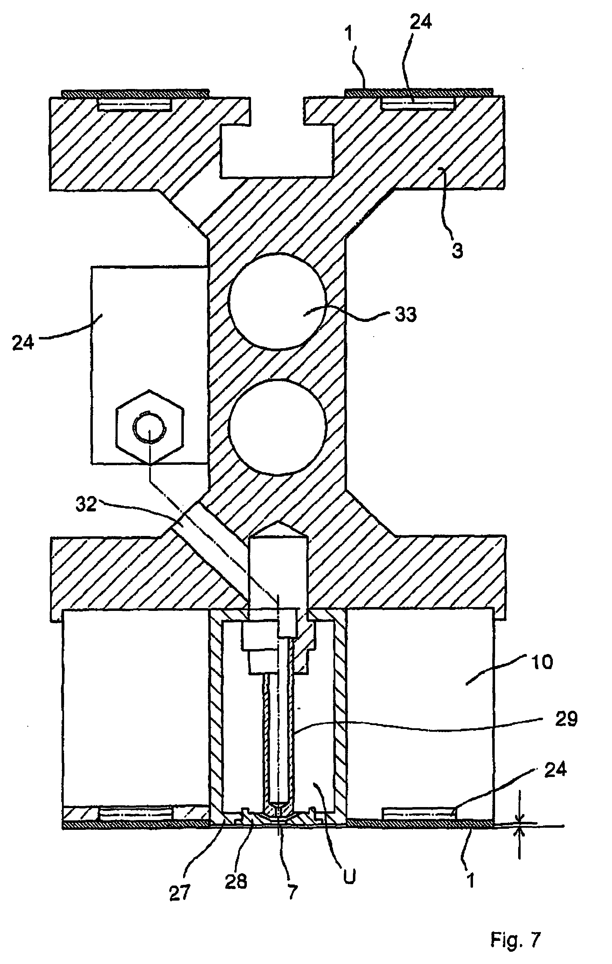

Die In Fig. 7 gezeigte Variante ist ähnlich der in Fig. 6 gezeigten. Die Fördergurte 1 sind hier jeweils in zwei Nuten 24 geführt. Das Ende des Druckluftstutzens 29 reicht bis nahe an die Innenseite der Ansaugblende 28. Bei Beaufschlagung des Druckluftstutzens 29 mit Druckluft wird dieser durch die Ansaugöffnung 7 ausgestoßen. Die Ansaugöffnung 7 wird In diesem Fall gewissermaßen dynamisch geschlossen, auch wenn der Unterdruckkanal U weiterhin mit Unterdruck beaufschlagt Ist.

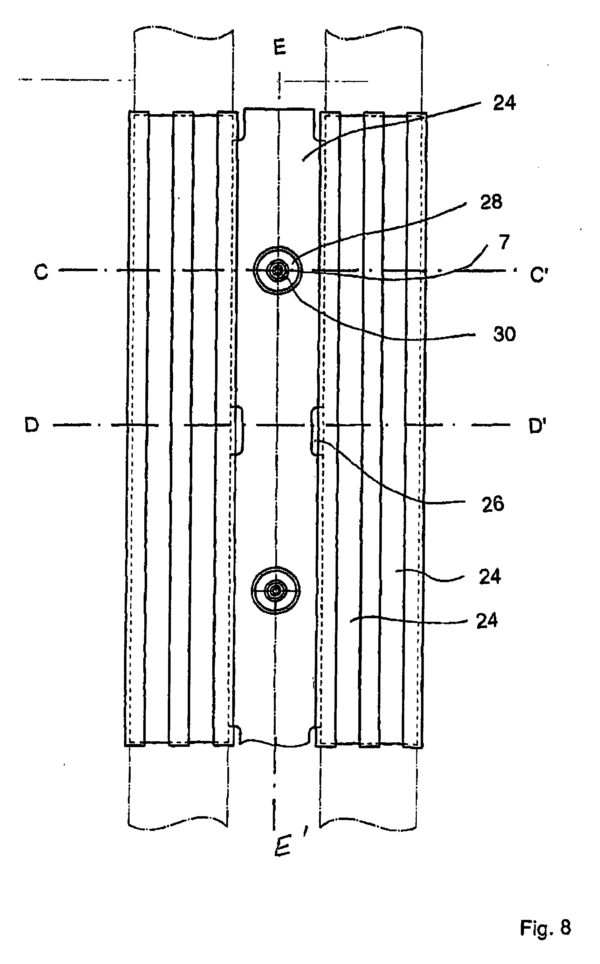

Fig. 8 zeigt eine Draufsicht auf eine Unterseite einer dritten Vorrichtung. Die beiden Transportgurte 1 sind hier wiederum jeweils In zwei Nuten 24 geführt. Zwischen den beiden Transportgurten 1 ist die Öffnungsebene 22 erkennbar, in welche die Ansaugblenden 28 mit den Ansaugöffnungen 7 eingeschraubt sind. Es sind ferner die Öffnungen der Druckluftstutzen 29 erkennbar. Die Belüftungsöffnungen 26 sind hier in Form zweier randlich an der Öffnungsebene 22 angeordneter Schlitze ausgebildet Die Schlitze liegen einander gegenüber. Sie befinden sich etwa in der Mitte zwischen jeweils zwei Ansaugöffnungen 7.

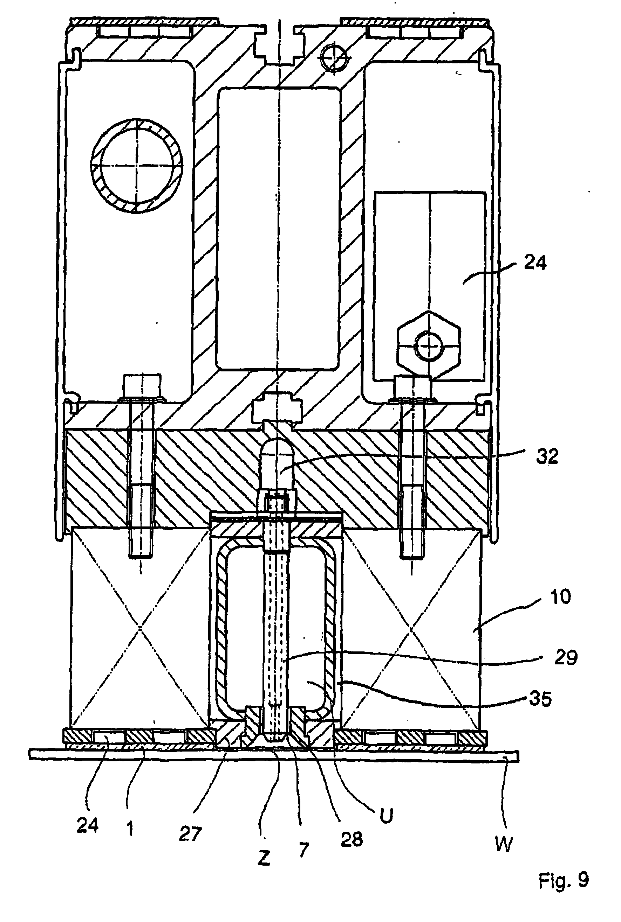

Fig. 9 zeigt eine Querschnittsansicht gemäß der Schnittlinie C - C' in Fig. 8. Die Ansaugöffnung 7 ist hier trichterförmig ausgebildet. Der Druckluftstutzen 29 ragt in den Bereich der Ansaugöffnung 7. Die Luft wird aus dem Spalt Z durch einen zwischen dem Druckluftstutzen 29 und einem in der Ansaugblende 28 befindlichen Durchbruch gebildeten Ringspalt abgesaugt. In Abweichung zu den vorhergehenden Ausführungsbeispielen ist hier der Unterdruckkanal U in einem Belüftungskanal 35 aufgenommen. Der Belüftungskanal 35 kann mit einem (hier nicht gezeigten) Mittel zur Steuerung der durch den Belüftungskanal 35 hindurchtretenden Luftmenge versehen sein. Es kann sich dabei z.B. um eine Luftblende handeln. Die vorgeschlagene Bauform ist besonders kompakt

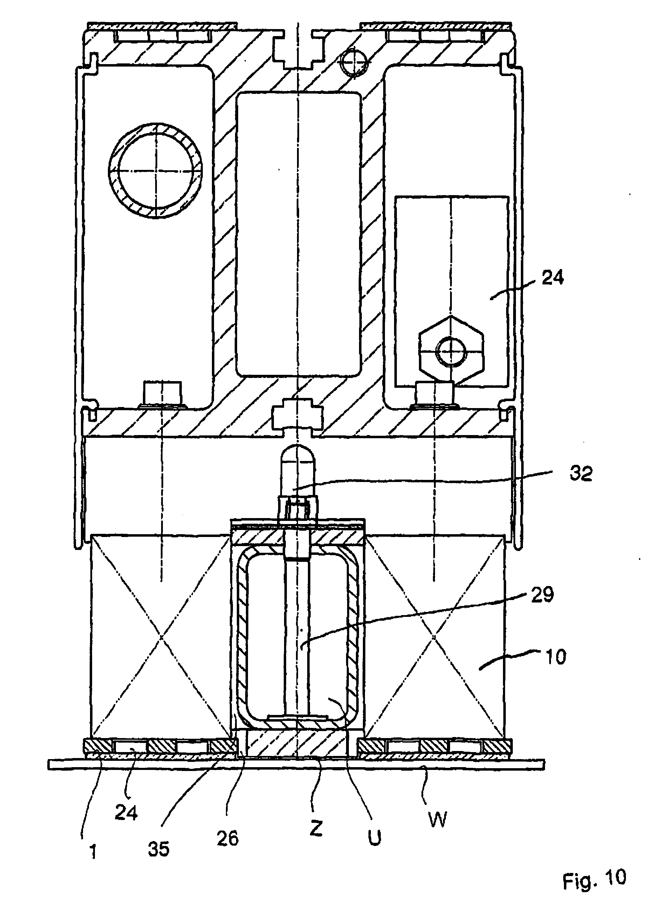

Fig. 10 zeigt eine Querschnittsansicht gemäß der Schnittlinie D - D' in Fig. 8. Aus dieser Ansicht geht klar die Verbindung zwischen dem Belüftungskanal 35 und den schlitzförmigen Belüftungsöffnungen 26 hervor.

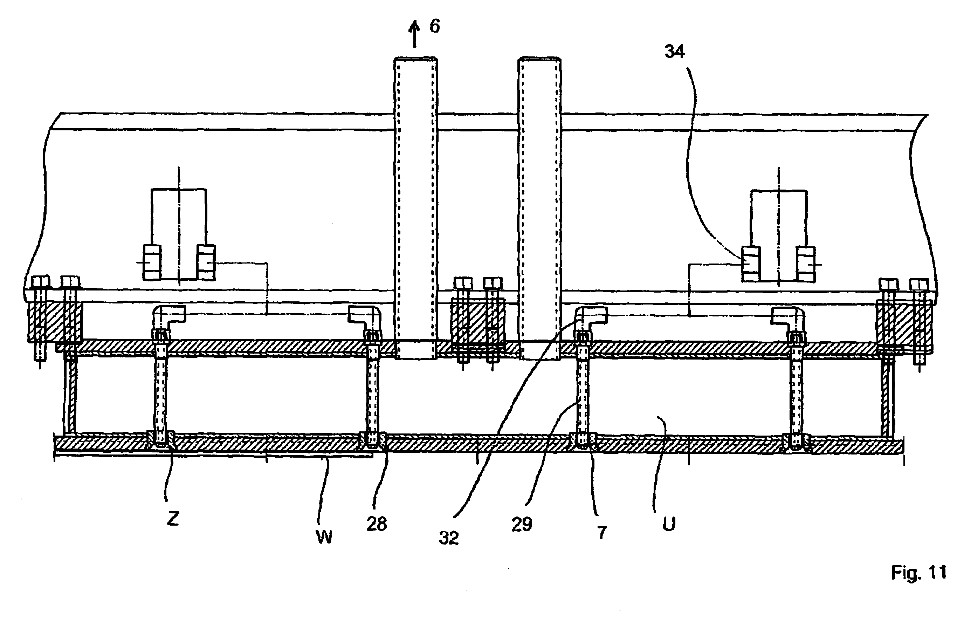

In Fig. 11 ist ein Längsschnitt gemäß der Schnittlinie E - E' in Fig. 8 gezeigt. Daraus geht insbesondere die gruppenweise Verschaftung der Druckluftstutzen 29 hervor. Deren Druckluftzuführungen 32 sind gruppenweise an Ventile 34 angeschlossen.

Sie können bei Öffnen der Ventile 34 gruppenweise mit Druckluft zum zielgenauen Abwerfen der Werkstücke W beaufschlagt werden.

### Die Funktion der Vorrichtungen ist folgende:

Zum Transport von aus einem ferromagnetischen Material hergestellten, insbesondere tafelförmig ausgebildeten, Werkstücken W wird mittels der Magneteinrichtungen 10 ein die Fördergurte 1 durchdringendes Magnetfeld erzeugt Die Werkstücke W haften an den Fördergurten 1 an. Zum Abwerfen der Werkstücke W wird das Magnetfeld In einem vorgegebenen Abwurfbereich abgeschaltet.

Zum Transport von aus einem nichtferromagnetischen Material hergestellten, insbesondere tafelförmig ausgebildeten, Werkstücken W, z.B. Aluminiumblechen, wird der Unterdruckkanal U mit einer (hier nicht gezeigten) Unterdruckquelle mit Unterdruck beaufschlagt. Es bildet sich ein Unterdruckstrom vom Spalt Z durch die Ansaugöffnungen 7 in den Unterdruckkanal U. Durch den im Spalt Z sich einstellenden Unterdruck wird außerdem Luft durch die Belüftungsöffnungen 26 in den Spalt Z gesaugt. Es bildet sich ein dynamischer Unterdruck aus, durch dessen Wirkung die Werkstücke W an den Fördergurten 1 gehalten werden.

Zum Abwerfen der Werkstücke W vom Fördergurt 1 werden die Ventile 34, vorzugsweise gruppenwelse, geöffnet. Die zu den Düsenkolben 30 führenden Druckluftstutzen 29 werden mit einem Überdruck beaufschlagt. Ggf. vorhandene Düsenkolben 30 werden infolgedessen gegen die Rückstellwirkung der Rückstellfedem 31 gegen die Innenseite der Ansaugblenden 28 gezwungen, so daß die Verbindung der Ansaugöffnungen 7 zum Unterdruckkanal U unterbrochen wird. Gleichzeitig wird durch die Düsenkolben 30 Druckluft in den Spalt Z geblasen. Der dynamische Unterdruck im Spalt Z bricht schlagartig zusammen. Die an den Fördergurten 1 anhaftenden Werkstücke werden zielgenau abgeworfen.

Vorteilhafterweise wird beim Betrieb der beschriebenen Vorrichtungen der Unterdruckkanal U ständig mit einem konstanten Unterdruck beaufschlagt. Der zielgenaue Abwurf der Werkstücke W kann in diesem Fall schnell und einfach durch Beaufschlagen der Druckluftstufzen 29 mit Druckluft in einem vorgegebenen Bereich erreicht werden. Das vorgeschlagene Verfahren ist deutlich schneller als etwa die bloße Unterbrechung oder das Abschalten des Unterdruckstroms im vorgegebenen Bereich.

Mittels der vorgeschlagenen Vorrichtung ist es möglich, sowohl ferromagnetische als auch nichtferromagnetisch Werkstücken zu transportieren und zielgenau abzuwerfen. Die Konstruktion der Vorrichtung ist besonders einfach und kompakt ausgebildet.

### Bezugszeichenliste

- 1: Fördergurt
- 2: Riemenscheibe
- 3: Haltevorrichtung
- 4: erste Kammer
- 5: zweite Kammer
- 6: Unterdruckquelle
- 7: Ansaugöffnung
- 8: Verbindungsleitung
- 9: Anker
- 10: Magnetvorrichtung
- 11: Permanentmagnet
- 12: Kompensationsspule
- 13: Führungseinrichtung
- 14: Längsrand
- 15: Anlagefläche
- 16: Steg
- 17: Stahllitze
- 18: Ansaugdüse
- 19: Verschlußstück
- 20: äußerer U-Anker
- 20a: äußere U-Basis
- 20b: äußerer U-Schenkel
- 21: innerer U-Anker
- 21a: innere U-Basis
- 21 b: innerer U-Schenkel
- 22: Öffnungsebene
- 23: Belüftungs- und Ausblasöffnung
- 24: Nut
- 25: Belüftungsleitung
- 26: Belürftungsöffnung
- 27: Wand
- 28: Ansaugblende
- 29: Druckluftstutzen
- 30: Düsenkolben
- 31: Rückutellfeder
- 32: Druckluftzuführung
- 33: Druckluftkanal
- 34: Ventil
- 35: Belüftungskanal

- W: Werkstück
- U: Unterdruckkanal
- T: T-Steg
- A: Abstand
- Z: Spalt
- F: Förderebene

## Patentansprüche

1. Vorrichtung zum Transport von Werkstücken, insbesondere von hängenden tafelförmigen Werkstücken wie Blechen oder Platten, mit
zumindest einem um eine Haltevorrichtung (3) umlaufend angetriebenen Fördergurt (1) zum Transport daran anhaftender Werkstücke (W),
wobei zum Halten der Werkstücke am Fördergurt (1) eine steuer- oder regelbare Einrichtung (6) zur Erzeugung von Unterdruck vorgesehen ist,
bei der eine durch Ansaugöffnungen (7) beschriebene Öffnungsebene (22) gegenüber einer durch die Außenseite des Fördergurts (1) gebildeten Förderebene (F) zur Haltevorrichtung (3) hin um einen Abstand (A) zurückversetzt ist, so daß zwischen einem am Fördergurt (1) anhaftenden Werkstück (W) und der Öffnungsebehe (22) ein Spalt (Z) gebildet ist und das Werkstück (W) durch einen im Spalt (Z) sich ausbildenden Unterdruck am Fördergurt (1) gehalten wird, wobei
eine Einrichtung (8, 23, 25, 26, 29, 30, 32) zur Belüftung des Spalts (Z) vorgesehen ist, so daß das Werkstück durch einen sich ausbildenden dynamischen Unterdruck am Fördergurt (1) gehalten wird, und wobei die Einrichtung zur Belüftung (8, 23, 25, 26, 29, 30, 32) an der den Werkstücken (W) zugewandten Seite der Haltevorrichtung (3) in regelmäßiger Anordnung Belüftungsöffnungen (23, 26) aufweist, so daß sich über die gesamte Länge des Spalts (Z) ein im wesentlichen gleichmäßiger dynamischer Unterdruck einstellt.

2. Vorrichtung nach Anspruch 1, wobei die Ansaugöffnungen (7) an einer den Werkstücken zugewandten Wand (27) eines im wesentlichen parallel zur Transportrichtung der Werkstücke (W) verlaufenden Unterdruckkanals (U) vorgesehen sind.

3. Vorrichtung nach Anspruch 2, wobei die Ansaugöffnungen (7) durch in der Wand (27) aufgenommene Ansaugdüsen (28) gebildet sind.

4. Vorrichtung nach Anspruch 3, wobei die Belüftungsöffnungen (23, 26) an der den Werkstücken (W) zugewandten Wand (27) des Unterdruckkanals (U) angeordnet sind.

5. Vorrichtung nach einem der Ansprüche 3 oder 4, wobei jede Belüftungsöffnung (23, 26) das Ende einer den Unterdruckkanal (U) durchgreifenden Belüftungsleitung (25) bildet.

6. Vorrichtung nach Anspruch 5, wobei die Belüftungsleitungen (25) mit einem Belüftungskanal (35) verbunden sind.

7. Vorrichtung nach einem der vorhergehenden Ansprüche, wobei eine Einrichtung zur steuerung und/oder Regelung des dynamischen Unterdrucks vorgesehen ist.

8. Vorrichtung nach einem der vorhergehenden Ansprüche, wobei eine Einrichtung zur wahlweisen Erzeugung eines den dynamischen Unterdruck unterbrechenden Druckluftstoßes vorgesehen ist.

9. Vorrichtung nach Anspruch 8, wobei der Druckluftstoß vom Unterdruckkanal (U) durch die Ansaugöffnungen (7) zum Spalt (Z) gerichtet ist.

10. Vorrichtung nach einem der Ansprüche 8 oder 9, wobei die Einrichtung zur wahlweisen Erzeugung eines DruckluftStoßes koaxial zu den Ansaugöffnungen (11) angeordnete Druckluftdüsen (29, 30) aufweist.

11. Vorrichtung nach Anspruch 10, wobei die Druckluftdüsen (29, 30) axial gegen die Ansaugöffnungen (7) hin- und herbewegbar sind.

12. Vorrichtung nach einem der Ansprüche 10 oder 11, wobei mittels der Druckluftdüsen (29, 30) die Ansaugöffnungen (7) verschließbar sind.

13. Vorrichtung nach einem der vorhergehenden Ansprüche 10 bis 12, wobei die Druckluftdüsen (29, 30) im Unterdruckkanal (U) angeordnet sind.

14. Vorrichtung nach einem der vorhergehenden Ansprüche 1 bis 13 wobei jeder Ansaugöffnung (7) jeweils eine Belüftungsöffnung (26) und ggf. eine Druckluftdüse (30) zugeordnet ist.

15. Vorrichtung nach einem der vorhergehenden Ansprüche 1 bis 14, wobei die Ansaugöffnungen (7) und Belüftungsöffnungen (23, 26) wechselweise in Längserstreckung der Haltevorrichtung (3) hintereinander angeordnet sind.

16. Vorrichtung nach einem der vorhergehenden Ansprüche 10 bis 15, wobei zum Abwerfen des Werkstücks die Druckluftdüsen (29, 30) mit Druckluft beaufschlägbar sind.

17. Vorrichtung nach einem der vorhergehenden Ansprüche, wobei in der Haltevorrichtung (3), vorzugsweise elektrisch schaltbare, Magneten (10) aufgenommen sind, so daß magnetische Werkstück (W) wahlweise durch ein Magnetfeld anhaftend am Fördergurt (1) haltbar sind.

18. Vorrichtung nach einem der vorhergehenden Ansprüche 2 bis 17, wobei der Unterdruckkanal (U) zwischen zwei Magneten (10) angeordnet ist.

19. Verfahren zum Transport von Werkstücken, insbesondere von hängenden tafelförmigen Werkstücken wie Blechen oder Platten, wobei zumindest ein Fördergurt (1) zum Transport daran anhaftender Werkstücke (W) um eine Haltevorrichtung (3) umlaufend angetrieben wird,
wobei zum Halten der Werkstücke (W) am Fördergurt (1) eine steuer- oder regelbare Einrichtung (6) zur Erzeugung eines Unterdrucks vorgesehen ist,
bei der eine durch Ansaugöffnungen (7) beschriebene Öffnungsebene (2) gegenüber einer durch die Außenseite des Fördergurts (1) gebildeten Förderebene (F) zur Haltevorrichtung (3) hin um einen Abstand (A) zurückversetzt ist, so daß zwischen einem am Fördergurt (1) anhaftenden Werkstück (W) und der Öffnungsebene (22) ein Spalt (Z) gebildet ist und das Werkstück (W) durch einen im Spalt (Z) sich ausbildenden Unterdruck (U) am Fördergurt (1) gehalten wird, wobei
eine Einrichtung (8, 23, 25, 26, 29, 30, 32) zur Belüftung des Spalts (Z) vorgesehen ist, so daß das Werkstück (W) durch einen im Spalt (Z) sich ausbildenden dynamischen Unterdruck am Fördergurt (1) gehalten wird, und wobei die Einrichtung zur Belüftung entlang der Haltevorrichtung (3) in regelmäßiger Anordnung Belüftungsöffnungen (23, 26) aufweist, so daß sich über die gesamte Länge des Spalts (Z) ein im wesentlichen gleichmäßiger dynamischer Unterdruck einstellt.

20. Verfahren nach Anspruch 19 oder 21 wobei zum Abwerfen der Werkstücke (W) der dynamische Unterdruck durch einen in den Spalt (Z) gerichteten Druckluftstoß unterbrochen wird.

21. Verfahren nach Anspruch 20, wobei der Druckluftstoß von einem Unterdruckkanal (U) durch die Ansaugöffnungen (7) zum Spalt (Z) gerichtet ist.

22. Verfahren nach einem der Anprüche 19 bis 21, wobei der dynamische Unterdruck mittels der Einrichtung (8, 23, 25, 26, 29, 30, 32) zur Belüftung des Spalts (Z) gesteuert und/oder geregelt wird.

23. Verfahren nach einem der Ansprüche 20 bis 22, wobei den Druckluftstoß bildende Druckluftdüsen (29, 30) bei Beaufschlagung mit Druckluft axial in Richtung der Ansaugöffnungen (7) bewegt werden.

24. Verfahren nach Anspruch 23, wobei die Ansaugöffnungen (7) bei Beaufschlagung der Druckluftdüsen (29, 30) mit Druckluft, vorzugsweise mittels der Druckluftdüsen (29, 30), verschlossen werden.

25. Verfahren nach einem Ansprüche 20 bis 24, wobei der Druckluftstoß in einer vorgegebenen Gruppe aufeinanderfolgender Ansaugöffnungen (7) erzeugt wird.

## Claims

1. Device to convey work pieces, particularly suspended, plate-shaped work pieces like a metal sheets or plates
with at least a conveyor belt (1) revolving around a retaining device (3) for conveyance of work pieces (w) adhering thereto,
wherein for retaining the work pieces on the conveyor belt (1) a controllable or regulatable device (6) for generation of negative pressure is provided,
in which an opening plane (22) described by suction ports (7) is recessed from the retaining device (3) at a distance (A) vis-à-vis a conveyor plane (F) created by the exterior side of the conveyor belt (1) so that a gap (Z) is formed between a work piece (W) adhering to the conveyor belt (1) and the opening plane (22) and the work piece (W) is held on the conveyor belt (1) by a negative pressure which is created in the gap (Z), wherein
a device (8, 23, 25, 26, 29, 30, 32) for ventilating the gap (Z) is provided so that the work piece is retained on the conveyor belt (1) by dynamic negative pressure which is created, and
wherein the device for ventilating (8, 23, 25, 26, 29, 30, 32) has on the side of the retaining device (3) pointing towards the work pieces (W) has regularly spaced ventilating openings (23, 26) so that a essentially constant dynamic negative pressure is created over the entire length of the gap (Z).

2. Device as defined in claim 1, wherein the suction ports (7) are provided on a wall (27) pointing towards the work pieces of a negative pressure passageway (U) essentially running parallel to the conveying direction of the work pieces (W).

3. Device as defined in claim 2, wherein the suction ports (7) are produced by suction jets (28) in the wall (27).

4. Device as defined in claim 3, wherein the ventilating opening (23, 26) are arranged on the wall (27) of the negative pressure passageway (U) pointing towards the work pieces (W) .

5. Device as defined in one of the claims 3 or 4, wherein each ventilating opening (23, 26) forms the end of a ventilating line (25) passing through the negative pressure passageway (U).

6. Device as defined in claim 5, wherein the ventilating lines (25) are connected with a ventilating passageway (35).

7. Device as defined in one of the preceding claims, wherein a devise is provided for control and/or regulation of the dynamic negative pressure.

8. Device as defined in one of the preceding claims, wherein a device is provided for generation as desired of a burst of compressed air to interrupt the dynamic negative pressure.

9. Device as defined in claim 8, wherein the burst of compressed air is directed from the negative pressure passageway (U) through the suction ports (7) to the gap (Z).

10. Device as defined in one of the claims 8 or 9, wherein the device for veneration as desired of a burst of compressed air has compressed air jets (29, 30) being arranged coaxial to the suction ports (11).

11. Device as defined in claim 10, wherein the compressed air jets (29, 30) can be moved back and forth axial to the suction ports (7).

12. Device as defined in one of the claims 10 or 11, wherein the suction ports (7) can be closed via the compressed air jets (29, 30).

13. Device as defined in one of the preceding claims 10 to 12, wherein the compressed air jets (29, 30) are positioned in the negative pressure passageway (U).

14. Device as defined in one of the preceding claims 1 to 13, wherein a ventilating opening (26) and, if necessary, a compressed air jet (30) are assigned to each suction port (7).

15. Device as defined in one of the preceding claims 1 to 14, wherein the suction ports (7) and ventilating openings (23, 26) are positioned alternately one after the other in longitudinal extension of the retraining device (3).

16. Device as defined in one of the preceding claims 10 to 15, wherein the compressed air jets (29, 30) can be pressurised with compressed air for dropping off the work piece.

17. Device as defined in one of the preceding claims, wherein the retaining device (3) preferably contains electrical, switchable magnets (10) so that magnetic work pieces (W) can be retained as desired on the conveyor belt (1) due to a magnetic field.

18. Device as defined in one of the preceding claims 2 to 17, wherein the negative pressure passageway (U) is located between two magnets (10).

19. Method for the conveyance of work pieces, in particular suspended, plate-shaped work pieces like metal sheets or plates, wherein at least one conveyor belt (1) for conveyance of the work pieces (W) adhering thereto revolves around a retaining device (3),
wherein for retaining the work pieces (W) on the conveyor belt (1) a controllable or regulatable device (6) for generation of a negative pressure is provided,
in which an opening plane (2) described by suction ports (7) is recessed from the retaining device (3) by a distance (A) vis-à-vis a conveyance plane (F) created by the exterior side of the conveyor belt (1) so that a gap (Z) is formed between a work piece (W) adhering to the conveyor belt (1) and the opening plane (22) and the work piece (W) is retained on the conveyor belt (1) by a negative pressure (U) created in the gap (Z), wherein
a device (8, 23, 25, 26, 29, 30, 32) for ventilating the gap (Z) is provided so that the work piece (W) is retained on the conveyor belt (1) by a dynamic negative pressure created in the gap (Z), and wherein the device for ventilating along the retaining device (3) is equipped with ventilating openings (23, 26) at regular intervals so that a primarily constant dynamic negative pressure is generated over the entire length of the gap (Z) .

20. Method as defined in claim 19, wherein for dropping off the work pieces (w) the dynamic negative pressure is interrupted by a burst of compressed air directed into the gap (Z).

21. Method as defined in claim 20, wherein the burst of compressed air is directed from a negative pressure passageway (U) through the suction ports (7) to the gap (Z).

22. Method as defined in one of the claims 19 to 21, wherein the dynamic negative pressure is controlled and/or regulated via the Device (8, 23, 25, 26, 29, 30, 32) for ventilating the gap (Z).

23. Method as defined in one of the claims 20 to 22, wherein the compressed air jets (29, 30) creating the burst of compressed air are moved axially in the direction of the suction ports (7) when pressurised with compressed air.

24. Method as defined in claim 23, wherein the suction ports (7) are closed preferably via the compressed air jets (29, 30) when the compressed air jets (29, 30) are pressurised with compressed air.

25. Method as defined in one of the claims 20 to 24, wherein the burst of compressed air is generated in a specified group of consecutive suction ports (7).

## Revendications

1. Dispositif destiné au transport de pièces à usiner, en particulier de pièces à usiner suspendues en forme de panneau telles que des tôles ou des plaques avec
au moins une courroie du convoyeur (1) avec renvoi d'entraînement sur un dispositif de retenue (3) pour le transport de pièces à usiner (W) maintenues par adhérence,
un mécanisme réglable ou pouvant être commandé (6) destiné à la production de dépression étant prévu pour le maintien des pièces à usiner sur la courroie du convoyeur (1),
pour lequel un plan d'ouverture (22) décrit par des orifices d'aspiration (7) par rapport à un plan d'amenée (F) formé par la face extérieure de la courroie du convoyeur (1) est décalé d'un intervalle (A) par rapport au dispositif de retenue (3) de façon qu'un écartement (Z) soit formé entre une pièce à usiner (W) qui adhère à la courroie du convoyeur (1) et le plan d'ouverture (22) et que la pièce à usiner (W) soit retenue sur la courroie du convoyeur (1) par une dépression qui se forme dans l'écartement (Z)
un mécanisme (8, 23, 25 26, 29, 30, 32) étant prévu pour la ventilation de l'écartement (Z) de façon que la pièce à usiner soit retenue sur la courroie du convoyeur (1) par suite de formation d'une dépression dynamique, et le mécanisme de ventilation (8, 23, 25, 26, 29, 30, 32) présentant à intervalles réguliers des orifices de ventilation (23, 26) sur le côté du dispositif de retenue (3) face aux pièces à usiner (W) de façon qu'une dépression dynamique essentiellement constante se règle sur l'ensemble de la longueur de l'écartement (Z).

2. Dispositif selon la revendication 1, les orifices d'aspiration (7) étant prévus sur une des parois (27) face aux pièces à usiner d'un canal de dépression (U) essentiellement parallèle au sens de transport des pièces à usiner (W).

3. Dispositif selon la revendications 2, les orifices d'aspiration (7) étant formés par des buses d'aspiration (28) aménagées dans la paroi (27).

4. Dispositif selon la revendication 3, les orifices de ventilation (23, 26) étant aménagés sur la paroi (27) face aux pièces à usiner (W) du canal de dépression (U).

5. Dispositif selon l'une des revendications 3 ou 4, chaque orifice de ventilation (23, 26) formant l'extrémité d'un conduit de ventilation (25) pénétrant dans le canal de dépression (U).

6. Dispositif selon la revendication 5, les conduits de ventilation (25) étant reliés à un canal de ventilation (35).

7. Dispositif selon l'une des revendications précédentes, un mécanisme pour la commande et/ou le réglage de la dépression dynamique étant prévu.

8. Dispositif selon l'une des revendications précédentes, un mécanisme étant prévu pour la production optionnelle d'une montée d'air comprimé interrompant la dépression dynamique.

9. Dispositif selon la revendication 8, la montée d'air comprimé du canal de dépression (U) étant dirigée vers l'écartement (Z) par les orifices d'aspiration (7).

10. Dispositif selon l'une des revendications 8 ou 9, le mécanisme pour la production optionnelle d'une montée d'air comprimé présentant des buses d'air comprimé (29, 30) disposées de manière coaxiale par rapport aux orifices d'aspiration (11).

11. Dispositif selon la revendication 10, les buses d'air comprimé (29, 30) pouvant être déplacées de manière axiale par rapport aux orifices d'aspiration (7).

12. Dispositif selon l'une des revendications 10 ou 11, les orifices d'aspiration (7) pouvant être fermés au moyen des buses d'air comprimé (29, 30) .

13. Dispositif selon l'une des revendications précédentes 10 à 12, les buses d'air comprimé (29, 30) étant aménagées dans le canal de dépression (U) .

14. Dispositif selon l'une des revendications précédentes 1 à 13, respectivement un orifice de ventilation (26) et, le cas échéant, une buse d'air comprimé (30) étant attribué à chaque orifice d'aspiration (7).

15. Dispositif selon l'une des revendications précédentes 1 à 14, alternativement les orifices d'aspiration (7) et les orifices de ventilation (23, 26) étant disposés successivement dans le sens longitudinal du dispositif de retenue (3).

16. Dispositif selon l'une des revendications précédentes 10 à 15, les buses d'air comprimé (29, 30) pouvant être alimentées en air comprimé pour éjecter la pièce à usiner.

17. Dispositif selon l'une des revendications précédentes, des aimants (10), de préférence commutables électriquement, sont aménagés dans le dispositif de retenue (3) de façon que des pièces à usiner (W) magnétiques puissent être retenues optionnellement par un champ magnétique adhérant à la courroie du convoyeur (1).

18. Dispositif selon l'une des revendications précédentes 2 à 17, le canal de dépression (U) étant disposé entre deux aimants (10).

19. Procédé pour le transport de pièces à usiner, en particulier de pièces suspendues en forme de panneau telles que des tôles ou des plaques, au moins une courroie du convoyeur (1) étant avec renvoi sur un dispositif de retenue (3) pour le transport de pièces à usiner (W) maintenues par adhérence,
un mécanisme réglable ou pouvant être commandé (6) destiné à la production d'une dépression étant prévu pour le maintien des pièces à usiner (W) sur la courroie du convoyeur (1),
pour lequel un plan d'ouverture (2) décrit par des orifices d'aspiration (7) par rapport à un plan d'amenée (F) formé par la face extérieure de la courroie du convoyeur (1) est décalé d'un intervalle (A) par rapport au dispositif de retenue (3) de façon qu'un écartement (Z) soit formé entre une pièce à usiner (W) qui adhère à la courroie du convoyeur (1) et le plan d'ouverture (22) et que la pièce à usiner (W) soit retenue sur la courroie du convoyeur (1) par une dépression (U) qui se forme dans l'écartement (Z),
un mécanisme (8, 23, 25, 26, 29, 30, 32) étant prévu pour la ventilation de l'écartement (Z) de façon que la pièce à usiner (W) soit retenue sur la courroie du convoyeur (1) par suite de formation d'une dépression dynamique dans l'écartement (Z), et le mécanisme pour la ventilation le long du dispositif de retenue (3) présentant à intervalles réguliers des orifices de ventilation (23, 26) de façon qu'une dépression dynamique essentiellement constante se règle sur l'ensemble de la longueur de l'écartement (Z).

20. Procédé selon la revendications 19, la dépression dynamique étant interrompue par une montée d'air comprimé dirigée dans l'écartement (Z) pour éjecter les pièces à usiner (W).

21. Procédé selon la revendication 20, la montée d'air comprimé étant dirigée d'un canal de dépression (U) vers l'écartement (Z) par les orifices d'aspiration (7).

22. Procédé selon l'une des revendications 19 à 21, la dépression dynamique étant commandée et/ou régulée au moyen du mécanisme (8, 23, 25, 26, 29, 30, 32) pour la ventilation de l'écartement (Z).

23. Procédé selon l'une des revendications 20 à 22, des buses d'air comprimé (29, 30) formant la montée d'air comprimé étant déplacées dans le sens axial des orifices d'aspiration (7) à alimentation en air comprimé.

24. Procédé selon la revendication 23, les orifices d'aspiration (7) étant fermés à alimentation des buses d'air comprimé (29, 30) en air comprimé, de préférence au moyen des buses d'air comprimé (29, 30).

25. Procédé selon l'une des revendications 20 à 24, la montée d'air comprimé étant produite dans un groupe défini d'orifices d'aspiration (7) successifs.
